# EUROPEAN PATENT APPLICATION

(11) **EP 2 390 135 A1**
(43) Date of publication of application: **30.11.2011**
(21) Application number: 10163870.8
(22) Date of filing: 26.05.2010
(51) Int. Cl.: B60Q 1/26, B60Q 1/38

(54) **Control device for vehicle turn lights**

(71) Applicant: Long Jing International Technology Enterprise Co., Ltd., Yongkang City (TW)
(72) Inventor: Lai, Ching-Tsung, Yongkang City (TW)
(74) Representative: Viering, Jentschura & Partner

(57) **Abstract**

A control device for vehicle turn lights includes a processing unit (1), at least three driving units (2, 3, 4), and at least three light emitting members (5, 6, 7). The processing unit (1) generates a driving signal and the at least three driving units (2, 3, 4) receive the signal in sequence. The at least three light emitting members (5, 6, 7) are arranged in parallel and respectively and electrically connected to the at least three driving units (2, 3, 4). The at least three driving units (2, 3, 4) drive the at least three light emitting members (5, 6, 7) in one direction in a sequence to obtain a directional indication.

## Description

### FIELD OF THE INVENTION

The present invention relates to a control device for vehicle turn lights, and more particularly, to a control device to drive taillights, brake lights and turn lights to be ON or OFF in sequence to obtain directional indications.

### BACKGROUND OF THE INVENTION

Conventional vehicle direction lights generally include running lights, brake lights and turn lights, and all of which are used to warn the following vehicles and show the front traffic situation in front of the vehicle to avoid accidents. However, each of the lights has only one indication function and is operated by way of constant "ON" or flashing. People's eyes have less sensitivity to these regulated types of indication so that many new types of vehicles lights are developed. One of the newly developed vehicle lights includes a power circuit, a micro-computer detection and driving unit, and a LED driving circuit. The power circuit generates electric power and when the micro-computer detection and the driving unit detect the signals, the software installed in the micro-computer detection and the driving unit controls the LED driving circuit on the output end to activate LEDs in a pre-set sequence, from an inner end to an outer end, until all of the LEDs are ON. When the micro-computer detection and the driving unit detect that the signals are disappear, the LEDs are controlled to be deactivated in a reverse direction until all of the LEDs are OFF. This specific display manner increases the visibility and the warning function of the brake lights and the turn lights. Also the rhythm of the brake lights can also be performed by using LEDs.

Nevertheless, the activation of the LEDs in a per-set sequence, such as from the inner end to the outer end can attracts the drivers' attention, it still has only one function. If the running lights, the brake lights and the turn lights are amended to use the technology, fundamental change has to be made and this increases the cost of these lights, which is disadvantageous for the competition in the market.

The present invention intends to provide a control device for the turn lights and the device does not need to fundamentally change the structure of the existed turn lights.

### SUMMARY OF THE INVENTION

The present invention relates to a control device for vehicle turn lights and the device comprises a processing unit which generates a driving signal and the driving signal is one of a running signal, a brake signal and a turn signal. At least three driving units are respectively and electrically connected to the processing unit. At least one of the at least three driving units receives the brake signal, and at least one of the at least three driving units receive the running signal. All of the at least three driving units receive the turn signal in a sequence and the sequence is a cycle. At least three light emitting members are arranged in parallel and respectively and electrically connected to the at least three driving units.

When the device is used as the tail lights, the existed structure of the tail lights dose not need to be changed. The device is connected with the tail lights, the brake lights and turn lights and these lights are operated to be activated in one direction in a sequence, and this replaces the conventional boring ways such as constant "ON" or flashing. The direction that the vehicle is going to turn is directly displayed and the drivers followed are clearly warned about the situation so as to increase the safety of driving. Because the original structure of the lights is not changed, so that the existed tail lights, the brake lights and the turn lights can be cooperated with the device and do not increase cost.

Furthermore, the processing unit and the driving units are integrated circuits and connected on a circuit board, proper programming can easily control the lights. The processing unit includes a transient voltage suppression circuit, a downstream circuit, a turn light signal detection circuit and a periodic sequence driving integrated circuit, all of which are different from the conventional control devices which control the light emitting members individually. The device of the present invention is compact, less expensive and precisely controllable. When the processing unit or the driving units are damaged, only the circuit board is to be replaced, rather than replacement of the whole conventional bulky control device which will cost more.

Besides, the light emitting members are light emitting diodes which save energy and have higher brightness.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 shows the connection between parts of the control device of the present invention;
Fig. 2 shows the diagram of the circuit of the processing unit of the control device of the present invention;
Fig. 3 shows that the first, second and third light emitting members are used as tail lights when the vehicle is normally driven;
Fig. 4 shows that the second and third light emitting members are activated when the vehicle brakes, and
Fig. 5 shows that the first, second and third light emitting members are activated in sequence to indicate the direction when the vehicle turns.

### DETAILED DESCRIPTION OF THE PREFERRED EMBODIMENT

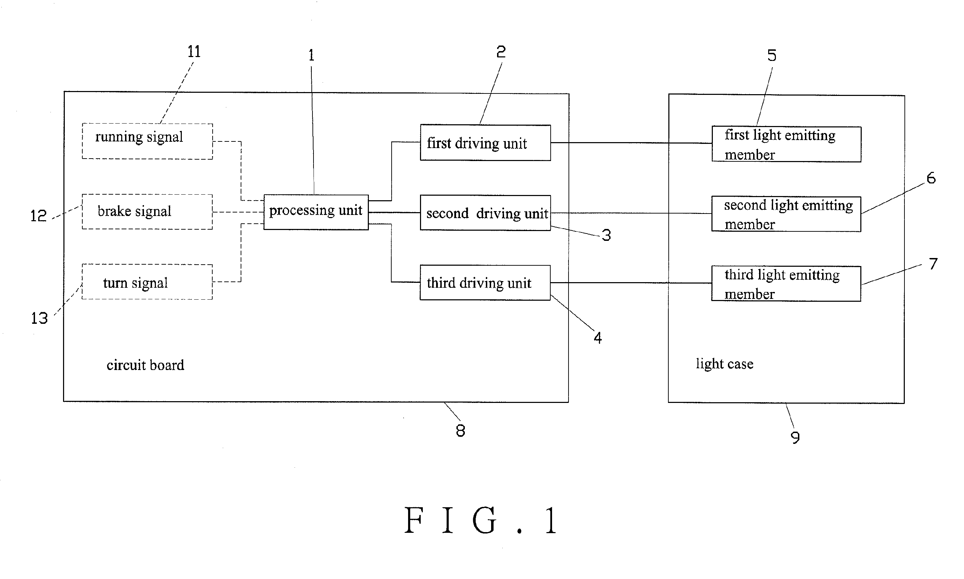

Referring to Fig. 1 which shows the control device for vehicle turn lights of the present invention and comprises a processing unit 1 which generates a driving signal and the driving signal is one of a running signal 11, a brake signal 12 and a turn signal 13.

A first driving unit 2, a second driving unit 3 and a third driving unit 4 are respectively and electrically connected to the processing unit 1. When the processing unit 1 generates the running signal 11, the three driving units 2, 3, 4 receive the running signal 11. When the processing unit 1 generates the brake signal 12, the second and third driving units 3, 4 receive the brake signal 12. When the processing unit 1 generates the turn signal 13, the first, second and third driving units 2, 3, 4 receive the turning signal 13 in a sequence and the sequence is a cycle.

A first light emitting member 5, a second light emitting member 6, and a third light emitting member 7 are arranged in parallel and respectively and electrically connected to the first, second and third driving units 2, 3, 4. The first, second and third driving units 2, 3, 4 receive the turn signal 13 and respectively drive the first, second and third light emitting members 5, 6, 7 which are activated in sequence to obtain a directional indication.

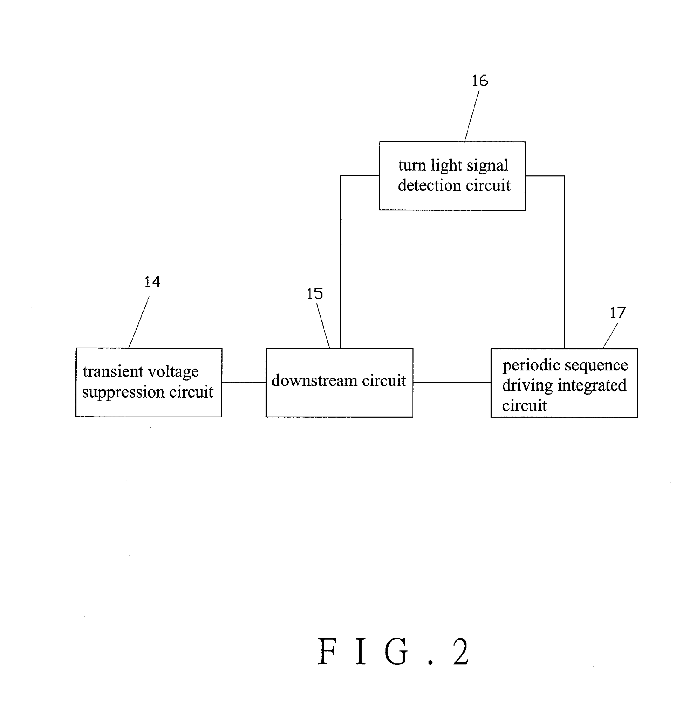

In this embodiment, the processing unit 1, the first, second and third driving units 2, 3, 4 are integrated circuits, and all of which are connected to a circuit board 8. By input of programs, the circuits can be controlled. The processing unit 1 includes a transient voltage suppression circuit 14, a downstream circuit 15, a turn light signal detection circuit 16 and a periodic sequence driving integrated circuit 17, as shown in Fig. 2. The control device of the present invention is compact, less expensive and precisely controllable. The first, second and third light emitting members 5, 6, 7 are light emitting diodes (LEDs) which save energy and have higher brightness.

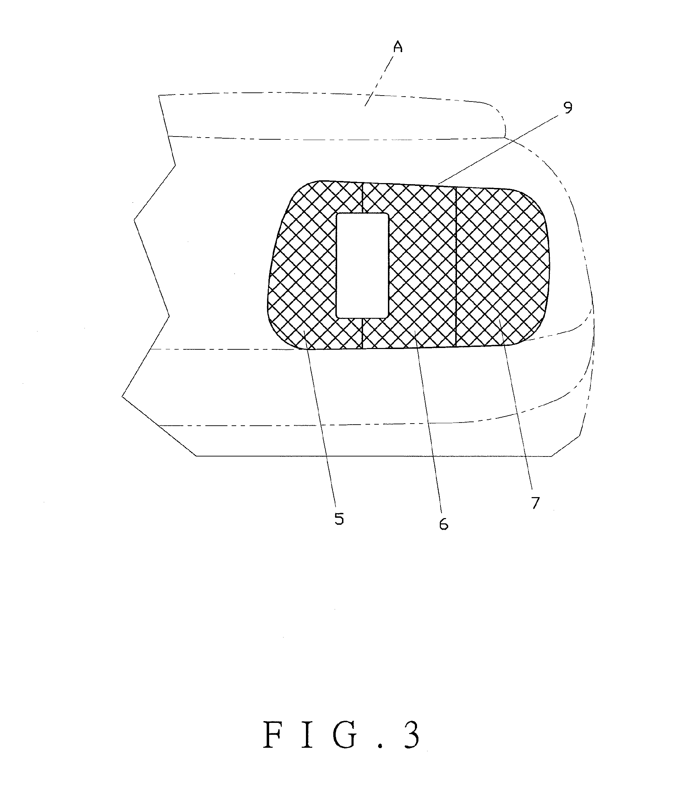

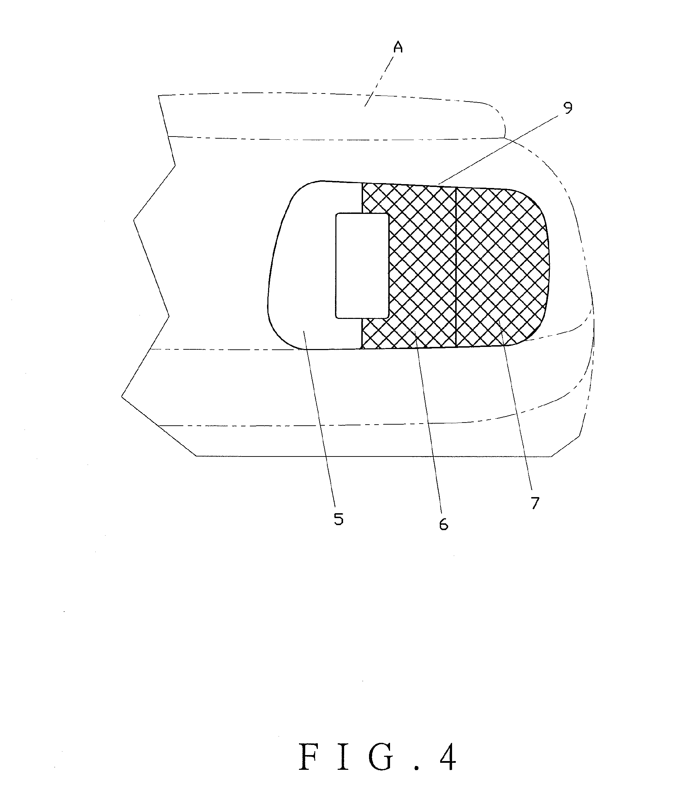

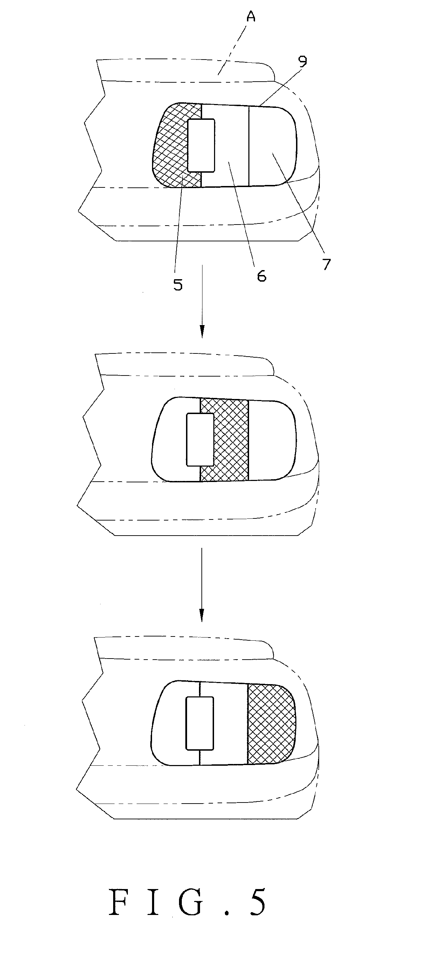

When in use, as disclosed in Figs. 3 to 5, the first, second and third light emitting members 5, 6, 7 are installed in a light case 9 which is installed to the rear end "A" of a vehicle. When the vehicle is normally driven or braked, the processing unit 1 generates the running signal 11 or the brake signal 12, the first, second and third driving units 2, 3, 4 drive the first, second and third light emitting members 5, 6, 7 simultaneously so as to perform as the tail light. Or, the second and third driving units 3, 4 drive the second and third light emitting members 6, 7 simultaneously to perform as brake lights. When the driver wants to turn, the processing unit 1 generates the turn signal 13, the first, second and third driving units 2, 3, 4 drive the first, second and third light emitting members 5, 6, 7 in a sequence and the sequence is a cycle. This forms a directional function to show the direction that the vehicle is about to turn. The present invention does not change the structure of the existed lights and is able to control the tail lights, the brake lights and the turn lights to have a new way of indication of the direction that the vehicle is about to turn. The indication of the direction can attract the attentions of the drivers followed to increase the safety of driving and the cost is not increased.

While we have shown and described the embodiment in accordance with the present invention, it should be clear to those skilled in the art that further embodiments may be made without departing from the scope of the present invention.

## Claims

1. A control device, **characterized by**:
a processing unit (1) generating a driving signal and the driving signal being one of a running signal (11), a brake signal (12) and a turn signal (13);
at least three driving units (2, 3, 4) respectively and electrically connected to the processing unit (1), at least one of the at least three driving units (2, 3, 4) receiving the brake signal (12), at least one of the at least three driving units (2, 3, 4) receiving the running signal (11), all of the at least three driving units (2, 3, 4) receiving the turn signal (13) in a sequence and the sequence being a cycle, and
at least three light emitting members (5, 6, 7) arranged in parallel and respectively and electrically connected to the at least three driving units(2, 3, 4).

2. The control device as claimed in claim 1, wherein the sequence is that the at least three light emitting members (5, 6, 7) are activated in a direction in sequence.

3. The control device as claimed in claim 1, wherein the processing unit (1) and the at least three driving units (2, 3, 4) are integrated circuits.

4. The control device as claimed in claim 1, wherein the at least three light emitting members (5, 6, 7) are light emitting diodes.
